# EUROPÄISCHE PATENTSCHRIFT

(11) **EP 2 546 621 B1**
(45) Veröffentlichungstag und Bekanntmachung des Hinweises auf die Patenterteilung: **06.10.2021**
(21) Anmeldenummer: 12174314.0
(22) Anmeldetag: 29.06.2012
(51) Int. Cl.: G02B 21/00, G01J 1/18, G01J 3/28, G01J 3/02, G01J 1/02, G01J 1/44, G01J 3/36

(54) **Vorrichtung und Verfahren zum Detektieren von Licht**
Device and method for detecting light
Dispositif et procédé de détection de lumière

(30) Priorität: 12.07.2011 DE 102011107645
(43) Veröffentlichungstag der Anmeldung: 16.01.2013
(73) Patentinhaber: Leica Microsystems CMS GmbH, 35578 Wetzlar (DE)
(72) Erfinder: Birk, Holger, 74909 Meckesheim (DE); Seyfried, Volker, 69226 Nußloch (DE)
(74) Vertreter: Ullrich & Naumann PartG mbB

(56) Entgegenhaltungen:
- EP-A1- 2 317 362
- EP-A1- 2 469 320
- DE-A1- 10 332 193
- DE-A1-102006 013 290
- US-A1- 2007 182 949
- US-A1- 2010 214 654
- FRACH T ET AL: "The digital silicon photomultiplier â Principle of operation and intrinsic detector performance", 2009 IEEE NUCLEAR SCIENCE SYMPOSIUM AND MEDICAL IMAGING CONFERENCE (NSS/MIC 2009), ORLANDO, FL, USA, IEEE, PISCATAWAY, NJ, USA, 24. Oktober 2009 (2009-10-24), Seiten 1959-1965, XP031826762, ISBN: 978-1-4244-3961-4
- FABRIZIO GUERRIERI ET AL: "Two-Dimensional SPAD Imaging Camera for Photon Counting", IEEE PHOTONICS JOURNAL, IEEE, USA, vol. 2, no. 5, 1 October 2010 (2010-10-01) , pages 759-774, XP011485000, ISSN: 1943-0655, DOI: 10.1109/JPHOT.2010.2066554
- E Charbon: "Will Avalanche Photodiode Arrays Ever Reach 1 Megapixel?", , 13 July 2009 (2009-07-13), XP055743146, Retrieved from the Internet: URL:https://www.imagesensors.org/Past%20Wo rkshops/2007%20Workshop/2007%20Papers/063% 20Charbon.pdf
- Douglas B. Murphy ET AL: "FUNDAMENTALS OF LIGHT MICROSCOPY AND ELECTRONIC IMAGING" In: "Fundamentals of Light Microscopy and Electronic Imaging", 31 October 2001 (2001-10-31), Wiley, Hoboken, New Jersey, XP055743299, ISBN: 0-471-25391-X

## Beschreibung

Die Erfindung betrifft ein Verfahren zum Detektieren von Licht in einem Mikroskop.

Aus der Praxis sind seit vielen Jahren Photomultiplier (PMT) bekannt, wobei es sich dabei um spezielle Elektronenröhren handelt, mit der Aufgabe, schwache Lichtsignale bis hin zu einzelnen Photonen durch Erzeugung und Verstärkung eines elektrischen Signals zu detektieren. Typischerweise besteht ein Photomultiplier aus einer Photokathode und einem nachgeschalteten Sekundärelektronenvervielfacher, angeordnet in einem evakuierten Glaskolben. Da es sich bei dem Photomultiplier um ein Röhrengerät handelt, baut dieser relativ groß, eignet sich daher nicht zur Miniaturisierung.

Des Weiteren sind aus der Praxis Avalanche-Photodioden bzw. Lawinenphotodioden (APD) bekannt, wobei es sich dabei um hochempfindliche und schnelle Photodioden handelt. Sie nutzen den inneren photoelektrischen Effekt zur Ladungsträgererzeugung und den Lawinendurchbruch (Avalanche-Effekt) zur internen Verstärkung. APDs werden als das Halbleiteräquivalent zu Photomultipliern betrachtet und finden u.a. Anwendung bei der Detektierung sehr geringer Strahlungsleistungen mit Grenzfrequenzen bis in den Gigahertz-Bereich.

Zur Photonenzählung werden APDs im Geiger-Modus betrieben, wobei man dabei regelmäßig von Single Photonen Avalanche Dioden (SPAD) spricht. Als neuere Entwicklungen sind Silicon-Photomultiplier (SiPM) bekannt, bei denen mehrere SPADs miteinander zu einer größeren Detektionsfläche analog oder digital kombiniert sind. Lediglich beispielhaft sei dazu auf die US 2010/0214654 A1 verwiesen.

Bei der Auswahl der Detektionssysteme geht es regelmäßig um eine möglichst große Photonendetektionswahrscheinlichkeit (PDE), ein möglichst geringes Dunkelrauschen (hervorgerufen durch einen sogenannten Dunkelstrom einzelner lichtempfindlicher Elemente) und eine möglichst große bzw. maximale Photonenrate, d.h. um eine große Dynamik des Detektors.

Photomultiplier-Röhren sind in der Konstruktion aufwändiger als Detektoren, die mit Si-Technologie gefertigt werden. Außerdem haben Photomultiplier in der Regel eine geringere Photonendetektionswahrscheinlichkeit als beispielsweise Avalanche-Photodioden. Bei sämtlichen Detektortypen hängt das Dunkelrauschen maßgeblich von der gesamten Detektionsfläche, der Qualität des Photokathodenmaterials sowie von der Betriebstemperatur des Detektors ab.

Des Weiteren ist aus der EP 2 317 362 A1 ein Verfahren zur Steigerung der Auflösung eines Mikroskops bei der Detektion einer beleuchteten Probe bekannt.

Der vorliegenden Erfindung liegt die Aufgabe zu Grunde, ein Verfahren zum Detektieren von Licht in einem Mikroskop anzugeben, wonach bei gegebener Beleuchtungs-/Lichtstärke eine hohe Bildqualität bzw. ein möglichst hohes Signal-Rauschverhältnis realisierbar ist.

Die voranstehende Aufgabe wird durch ein Verfahren gemäß Anspruch 1 gelöst.

Dabei ist auch eine über den erfindungsgemäßen Gegenstand des Anspruchs 1 hinausgehende Vorrichtung zum Detektieren von Licht offenbart, insbesondere in einem Mikroskop, in einem Spektrometer oder in einer Kamera, mit mindestens einem Silicon-Photomultiplier (SiPM) ausgestattet. Der Silicon-Photomultiplier besteht aus einer Anordnung bzw. einem Array mehrerer Single Photonen Avalanche Dioden (SPAD). Wesentlich ist dabei, dass das Array eine größere Fläche als das auftreffende Licht hat, wobei nur diejenigen SPADs aktiviert und/oder ausgewertet werden, die mit einer bestimmten - hohen - Mindestintensität von Licht auch tatsächlich beaufschlagt bzw. getroffen werden.

Die Vorrichtung umfasst einen speziell angepassten SiPM, wobei der Aufbau des SiPM eine hohe Photonendetektionswahrscheinlichkeit (PDE) aufweist, nämlich wie bei den Single Photonen Avalanche Dioden (SPAD). Die Dynamik eines einzelnen Pixels ergibt sich aus der Anzahl der pro Pixel kombinierten SPADs sowie aus der Totzeit einer einzelnen SPAD. Die Totzeit kann mittels "active quenching" sehr kurz gehalten werden, nämlich im Bereich > 100 SPAD pro Pixel und < 50 ns Totzeit.

Die hier verwendeten SiPM bieten die Möglichkeit, einzelne SPADs eines Pixels gezielt zu aktivieren bzw. zu deaktivieren. Dazu eignet sich insbesondere ein SiPM mit digitaler Auswertelektronik. So kann ein adressierbarer statischer Speicher dazu benutzt werden, einzelne SPADs direkt auf einem Chip - selektiv - zu aktivieren. Des Weiteren ist von ganz besonderem Vorteil, dass SiPMs in einem konventionellen CMOS-Prozess herstellbar sind. Entsprechend sind solche Silicon-Photomultiplier äußerst robust, insbesondere gegenüber hohen bzw. zu hohen Lichtleistungen.

In erfindungsgemäßer Weise umfasst die Vorrichtung eine Anordnung mehrerer Silicon-Photomultiplier (SiPM), wobei jeder SiPM ein Pixel bildet und jeweils aus einem Array mehrerer Single Photonen Avalanche Dioden besteht.

Die mehreren SiPMs können matrixartig, beispielsweise zur Anwendung in einer Kamera, oder linear nebeneinander, beispielsweise zur Anwendung in einem Spektrometer, angeordnet sein. Die Anordnung der SiPMs weist insgesamt eine größere Fläche als das auftreffende Licht auf, wobei nur diejenigen SPADs der verschiedenen SiPMs innerhalb der Anordnung aktiviert und/oder ausgewertet werden, die mit einer bestimmten - hohen - Mindestintensität von Licht beaufschlagt bzw. beleuchtet werden.

Die Mindestintensität von Licht lässt sich aus einer oder mehreren Probemessungen bzw. einer Kalibrierung bei jeweils vorgegebener Systemeinstellung ermitteln.

Nach der erfindungsgemäßen Lehre geht es grundsätzlich darum, das Dunkelrauschen der Vorrichtung bzw. eines entsprechend aufgebauten Detektors zu minimieren, indem nur diejenigen SPADs aktiviert werden, die zu einem hohen Signal-Rausch-Verhältnis beitragen. Folglich werden nur diejenigen SPADs bzw. Pixel aktiviert, auf denen auch tatsächlich Detektionslicht erwartet wird. Entsprechend liefern auch nur diese - aktivierten - SPADs einen Beitrag zum Dunkelrauschen.

Des Weiteren ist - unabhängig von der voranstehend erwähnten Problematik - in weiter erfindungsgemäßer Weise erkannt worden, dass das Dunkelrauschen in ganz besonderem Maße von Defekten in der lichtempfindlichen Schicht der SPADs verursacht wird. So kommt es beispielsweise vor, dass eine schadhafte SPAD ein elektronisches Signal liefert, wenngleich kein Licht auf den lichtempfindlichen Bereich der Diode aufgetroffen ist. Die Wahrscheinlichkeit für ein solches Fehlverhalten wird Dunkelzählrate genannt, die es so gering wie möglich zu halten gilt.

Da sich die zuvor erwähnten - größeren - Detektorflächen nicht völlig defektfrei herstellen lassen, sind bei SiPMs einige wenige, nicht ordnungsgemäß arbeitende SPADs (regelmäßig weniger als 5 %) vorhanden, die - ungeachtet ihrer geringen Anzahl - auf Grund einer nicht unerheblichen Dunkelzählrate für den Hauptanteil des Dunkelrauschens verantwortlich sind. Insoweit ist auch eine über den erfindungsgemäßen Gegenstand des Anspruchs 1 hinausgehende Vorrichtung zum Detektieren von Licht offenbart, insbesondere zur Anwendung in einem Mikroskop, in einem Spektrometer oder in einer Kamera, mit mindestens einem Silicon-Photomultiplier (SiPM), der aus einer Anordnung (Array) mehrerer Single Photonen Avalanche Dioden (SPAD) besteht, wobei je SiPM diejenigen SPADs deaktiviert oder nicht ausgewertet werden, deren Funktion unzureichend bzw. fehlerhaft ist, die somit nicht einwandfrei _{"}performen". So ist in erfindungsgemäßer Weise erkannt worden, dass durch Deaktivieren einzelner SPADs mit hohem Dunkelrauschen sich das Signal-Rausch-Verhältnis der gesamten Anordnung erheblich verbessert, auch wenn man auf das jeweilige Detektionssignal der fehlerhaften und somit in erfindungsgemäßer Weise deaktivierte SPAD verzichtet. Die unzureichende oder fehlerhafte Funktion einzelner SPADs lässt sich durch einen unteren Schwellwert des Verhältnisses von Nutzsignal zu Dunkelrauschen vorgeben, wobei es hier nicht auf einen festen Schwellwert ankommt.

Die unzureichend ausgeleuchteten oder unzureichend oder fehlerhaft arbeitenden SPADs lassen sich durch Probe-/Kalibriermessungen ermitteln, so dass über die gesamte Betriebsdauer des SiPM hinweg eine Deaktivierung der fehlerhaften SPADs möglich ist. Dabei ist es weiter möglich, eine Art Beleuchtungsintensitätskarte bzw. Dunkelrauschkarte des Chips zu erstellen, wobei dazu zum Beispiel sequentiell jeweils nur ein Teil der SPADs pro Pixel und bevorzugt nur eine SPAD pro Pixel auf einmal aktiviert wird, so dass anhand der Pixelzählrate die Dunkelzählrate den einzelnen SPADs zugeordnet werden kann. Um den flächenmäßigen Anteil der zu deaktivierenden Pixel möglichst klein zu halten, kann es von Vorteil sein, möglichst viele kleine SPADs anstelle weniger großer SPADs pro Pixel zu verwenden.

Grundsätzlich ist es denkbar, dass die zu deaktivierenden SPADs schlichtweg "abgeklemmt" werden, so dass diese innerhalb der gesamten Anordnung des SiPM keine Funktion haben.

Auch ist es denkbar, dass die zu deaktivierenden SPADs über eine Steuerung, vorzugsweise progammiertechnisch, deaktiviert werden, so dass kein mechanischer Eingriff in die Anordnung erforderlich ist.

Schließlich ist es auch denkbar, dass die elektrischen Ausgangssignale der nicht zu berücksichtigenden SPADs bei der Auswertung der Signale verworfen werden. An dieser Stelle sei angemerkt, dass die voranstehend genannten Methoden zur Deaktivierung bzw. zur Nicht-Berücksichtigung sowohl in Bezug auf die ermittelte Mindestintensität des Lichts als auch in Bezug auf fehlerhafte SPADs Anwendung finden können.

In Bezug auf die Anordnung der einzelnen SPADs zur Bildung eines SiPM ist problematisch, dass auf Grund fertigungstechnischer Zwänge zwischen den einzelnen SPADs und vor allem auch zwischen den einzelnen Pixeln lichtunempfindliche Bereiche vorhanden sind, nämlich Randbereiche der SPADs und Zwischenräume zwischen den SPADs. Entsprechend ist der lichtempfindliche Anteil der gesamten beleuchteten Fläche, Füllfaktor genannt, erheblich geringer als 100 %, typischerweise im Bereich zwischen 50 % und 70 %. Daraus resultiert eine geringere Photonendetektionswahrscheinlichkeit, nämlich auf Grund der lichtunempfindlichen Bereiche. Um die damit einhergehende geringe Photonendetektionswahrscheinlichkeit im Vergleich zu einer einzelnen Single Photonen Avalanche Diode zu kompensieren, lassen sich in ganz besonders vorteilhafter Weise den SPADs eines SiPM Mikrolinsen bzw. ein auf die Anordnung der SPADs abgestimmtes Mikrolinsenarray zuordnen. Die Mikrolinsen fokussieren das auf die gesamte Anordnung auftreffende Licht auf die jeweils lichtempfindlichen Bereiche der SPADs, so dass sich durch diese Maßnahme der Füllfaktor erhöhen lässt. Einzelne SPADs, die von dem fokussierten Licht nicht mehr getroffen würden, werden deaktiviert, und zwar ungeachtet der Vorkehrungen von Mikrolinsen.

Insbesondere im Hinblick auf eine einfache Herstellung und kompakte Bauweise eines SiPM lassen sich dazu die SPADs auf einem Chip, vorzugsweise aus einem Silizium-Substrat, anordnen. Zur Reduzierung der Dunkelzählrate ist es möglich, den SiPM-Chip zu kühlen, beispielsweise mittels thermoselektiver Kühlung. Eine Kühlung unter -40° C ist möglich und von Vorteil.

Eine Anwendung der beschriebenen Vorrichtung in konfokalen Mikroskopen ist von besonderem Vorteil, wobei dort, beispielsweise von einer Probe kommendes Fluoreszenz-Licht spektral selektiv zu detektieren ist. Hier bietet es sich an, die Vorrichtung in erfindungsgemäßer Weise im Sinne eines Detektor-Arrays auszulegen.

Auch lässt sich die beschriebene Vorrichtung in einem Spektrometer verwenden, wobei im Rahmen einer solchen Anwendung bekannt ist, welche Diode zu dem jeweils gewünschten Spektralbereich gehört. Entsprechend lassen sich nur diejenigen Pixel aktivieren, auf denen auch tatsächlich Detektionslicht im jeweiligen Spektralbereich erwartet wird.

Auch die Verwendung der beschriebenen Vorrichtung in einer Kamera ist möglich, nämlich auf Grund der zuvor bereits genannten Eigenschaften einer Anordnung von SiPMs, jeweils bestehend aus Arrays einzelner SPADs.

Zu den Merkmalen des erfindungsgemäßen Verfahrens sei zur Vermeidung von Wiederholungen auf die Ausführungen zu der beschriebenen Vorrichtung verwiesen, aus denen sich die das Verfahren betreffenden Merkmale ergeben. Auch hier ist wesentlich, dass nur diejenigen SPADs aktiviert und/oder ausgewertet werden, die mit einer bestimmten Mindestintensität von Licht auch tatsächlich beaufschlagt werden. Je SiPM werden - alternativ oder ergänzend - diejenigen SPADs aktiviert oder nicht ausgewertet, deren Funktion unzureichend bzw. fehlerhaft ist, die jedenfalls keine saubere Performance aufweisen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Patentansprüche und andererseits auf die nachfolgende Erläuterung anhand der Zeichnung zu verweisen. In Verbindung mit der Erläuterung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht die grundsätzliche Anordnung eines konfokalen Mikroskops mit den wesentlichen Bauteilen, wobei eine nicht erfindungsgemäße und nicht beanspruchte Vorrichtung als Detektor-Array ausgelegt ist,
- Fig. 2: in einer schematischen Ansicht den grundsätzlichen Aufbau eines Arrays mit SPADs und deren Möglichkeit zur analogen oder digitalen Verschaltung/Auswertung,
- Fig. 3: in einer schematischen Ansicht den grundsätzlichen Aufbau eines Spektrometers mit einer Vorrichtung als Detektor-Array,
- Fig. 4: in schematischen Ansichten Anordnungen mehrerer SiPMs als MultipixelSiPMs, beispielsweise zur Anwendung in einer Kamera (Fig. 4a) oder in einem Spektrometer (Fig. 4b),
- Fig. 5: in schematischen Ansichten den nicht unter Anspruch 1 fallenden Einsatz von SPAD-Anordnungen (Arrays) als Ersatz herkömmlicher Photomultiplier,
- Fig. 6: in schematischen Ansichten die Lichtverteilung (Fig. 6a) und die Aktivierung/Deaktivierung einzelner SPADs (Fig. 6b),
- Fig. 7: in schematischen Ansichten die Lichtverteilung (Fig. 7a) und die Aktivierung/Deaktivierung einzelner SPADs (Fig. 7b), gegenüber der Darstellung in Fig. 6 mit einem kleineren Lichtspot,
- Fig. 8: in schematischen Ansichten den nicht unter Anspruch 1 fallenden Einsatz von SPAD-Anordnungen (Arrays) als Ersatz herkömmlicher Photomultiplier bei sogenannten SP-Detektoren mit variabler Blende,
- Fig. 9: in schematischen Ansichten den nicht unter Anspruch 1 fallenden Einsatz von SPAD-Anordnungen (Arrays) als Ersatz herkömmlicher Photomultiplier bei sogenannten SP-Detektoren mit variabler Blende, wobei die im Stand der Technik verwendeten Photomultiplier durch ein Array aus SPADs ersetzt sind,
- Fig. 10: in schematischen Ansichten die Lichtverteilung (Fig. 10a) und die Aktivierung/Deaktivierung einzelner SPADs (Fig. 10b),
- Fig. 11: in schematischen Ansichten die Lichtverteilung (Fig. 11a) und die Aktivierung/Deaktivierung einzelner SPADs (Fig. 11b), im Vergleich zu der Darstellung in Fig. 10 in Bezug auf eine andere Detektionswellenlänge,
- Fig. 12: in einer schematischen Ansicht den Aufbau eines Arrays aus SiPMs, wobei Fig. 12a die Lichtverteilung und Fig. 12b die Aktivierung/Deaktivierung einzelner SPADs zeigt,
- Fig. 13: in einer schematischen Ansicht den Aufbau einer Anordnung mehrerer SiPMs, wobei Fig. 13a die Lichtverteilung und Fig. 13b die Aktivierung/Deaktivierung einzelner SPADs zeigt, jedoch in Bezug auf eine andere Wellenlänge,
- Fig. 14: in einer schematischen Ansicht die Lichtverteilung (Fig. 14a) und die Deaktivierung/Aktivierung einzelner SPADs (Fig. 14b), wobei die SiPMs linear angeordnet sind,
- Fig. 15: in einer schematischen Ansicht die matrixartige Anordnung mehrerer SiPMs mit integrierten SPADs, wobei dort SPADs mit hohem Dunkelrauschen deaktiviert sind (Fig. 15b),
- Fig. 16: in einer schematischen Ansicht matrixartig angeordnete SiPMs, wobei dort zur Begünstigung der Lichtverteilung Mikrolinsen vorgesehen sind.

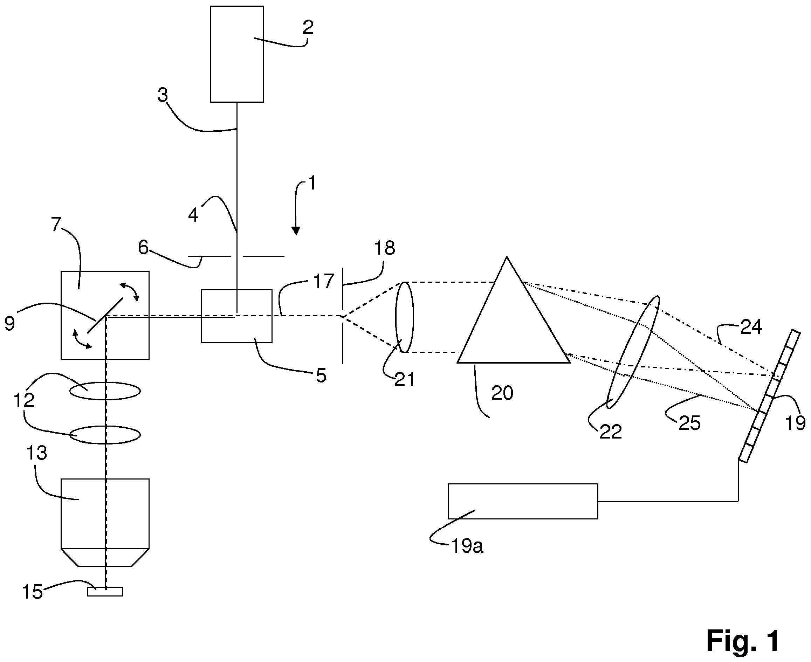

Fig. 1 zeigt am Beispiel eines konfokalen Scanmikroskops die Nutzung einer Vorrichtung zur Detektion von der Probe zurückkommenden Lichts. Im Konkreten zeigt Fig. 1 den schematischen Aufbau eines konfokalen Scanmikroskops 1, bei dem ein Array 19 aus SPADs 26 zur Detektion der Signale vom Scanmikroskop 1 genutzt wird. Der von einer Lichtquelle 2 kommende Beleuchtungslichtstrahl 3 wird von einem Strahlteiler oder einem geeigneten Umlenkmittel 5 zu einer Scaneinrichtung 7 geleitet. Bevor der Beleuchtungslichtstrahl 3 auf das Umlenkmittel 5 trifft, passiert dieser ein Beleuchtungspinhole 6.

Die Scaneinrichtung 7 umfasst einen ― bei diesem Beispiel ― kardanisch aufgehängten Scanspiegel 9, der den Beleuchtungslichtstrahl 3 durch eine Scanoptik 12 und eine Mikroskopoptik 13 hindurch über bzw. durch ein Objekt 15 führt. Der Beleuchtungslichtstrahl 3 wird bei nicht transparenten Objekten 15 über die Objektoberfläche geführt. Bei biologischen bzw. transparenten Objekten 15 kann der Beleuchtungslichtstrahl 3 durch das Objekt geführt werden. Zu diesen Zwecken werden nichtleuchtende Präparate ggf. mit einem geeigneten Farbstoff präpariert.

Die in dem Objekt 15 ggf. vorhandenen Farbstoffe werden durch den Beleuchtungslichtstrahl 3 angeregt und senden Licht in einem ihnen eigenen charakteristischen Bereich des Spektrums aus. Das vom Objekt 15 ausgehende Licht definiert einen Detektionslichtstrahl 17. Dieser gelangt durch die Mikroskopoptik 13, die Scanoptik 12 und über das Scanmodul 7 zum Umlenkmittel 5, passiert dieses und gelangt über eine Detektionslochblende 18 auf das Array 19. Der vom Objekt 15 ausgehende bzw. definierte Detektionslichtstrahl 17 ist in Fig. 1 als gestrichelte Linie dargestellt.

Im Array 19 werden elektrische Detektionssignale erzeugt, die von der Leistung des vom Objekt 15 ausgehenden Lichts abhängen. Da vom Objekt 15 Licht nicht nur einer Wellenlänge ausgesandt wird, kann es sinnvoll sein, vor dem Array 19 ein dispersives Element 20 anzuordnen. Das dispersive Element 20 spaltet den Detektionslichtstrahl 17 spektral auf, so dass die einzelnen Wellenlängen des Detektionslichts räumlich spektral getrennt sind. Dem dispersiven Element 20 kann eine Linse 21 vorgeschaltet sein, die den Detektionslichtstrahl 17 aufweitet und parallelisiert. Dem dispersiven Element 20 kann außerdem eine Detektoroptik 22 nachgeschaltet sein, die die spektral getrennten Strahlen 24, 25 des Detektionslichtstrahl 17 auf das Array 19 fokussiert. Die spektral getrennten Strahlen 24, 25 unterscheiden sich hinsichtlich der Wellenlänge und treffen somit auf unterschiedliche Bereiche auf dem Array 19. In der hier dargestellten Ausführungsform ist vor dem dispersiven Element 20 eine Aufweitungsoptik 23 vorgesehen Die Aufweitungsoptik 23 kann derart ausgebildet sein, dass die numerische Apertur der Detektoroptik 22 unabhängig von der numerischen Apertur des Detektionslichtstrahls 17 an der Detektionslochblende 18 ist.

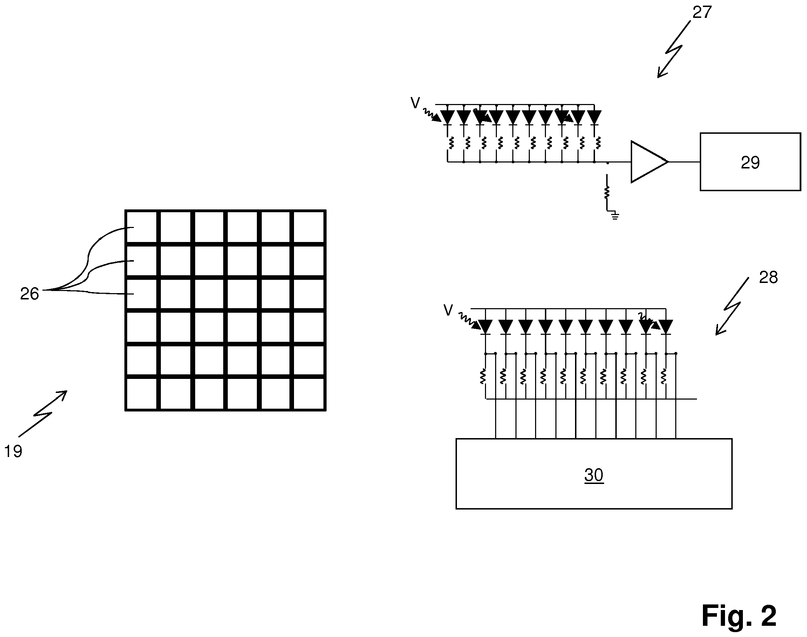

Fig. 2 zeigt in einer schematischen Ansicht den grundsätzlichen Aufbau eines Arrays 19 einer Vorrichtung, wobei das Array 19 mehrere SPADs 26 umfasst. Gemeinsam bilden die SPADs 26 den SiPM 19, bei diesem Ausführungsbeispiel für ein Pixel.

Fig. 2 zeigt darüber hinaus die grundsätzliche Verschaltung des SiPM 19 bzw. des SPADs 26 bei analoger Auswertung 27 und digitaler Auswertung 28, wobei im Rahmen der analogen Auswertung 27 das Signal einem AD-Wandler 29 und einer entsprechenden Auswertung zugeführt wird. Im Rahmen der digitalen Auswertung 28 werden die Signale einer digitalen Auswertelogik 30 (on chip read out) zugeführt. Die SPADs 26 sind dabei einzeln adressierbar.

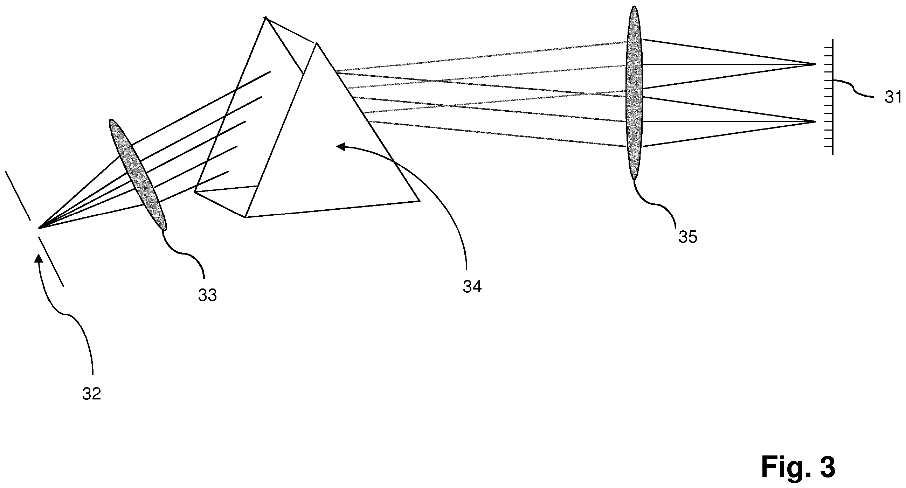

Fig 3. zeigt einen grundsätzlichen Spektrometer-Aufbau, wobei das zu detektierende Licht nach einer Blende/Pinhole 32 über eine Optik 33 parallelisiert und durch ein dispersives Element, z.B. ein Prisma, Gitter 34 oder Hologramm spektral aufgespalten wird. Über eine weitere Optik 35 gelangt das spektral aufgespaltene Licht zu einem Detektor-Array 31, welches als Multipixel-Array mit mehreren SiPMs, bestehend aus SPADs, aufgebaut ist.

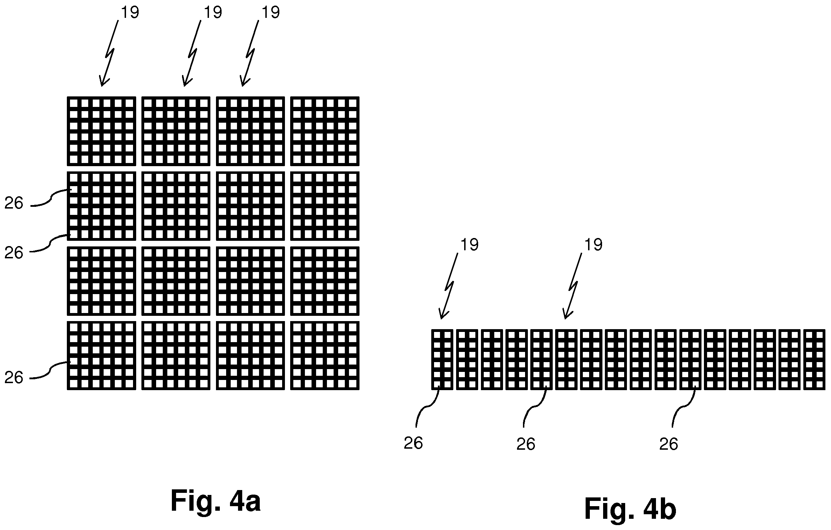

Fig. 4 zeigt mögliche Anordnungen von SiPMs 19, jeweils bestehend aus Arrays von SPADs 26. Die Anordnung des SiPMs 19 kann beispielsweise zur Anwendung in einer Kamera matrixartig (Fig. 4a) ausgebildet sein. Zur Anwendung in einem Spektrometer können die SiPMs 19 linear (Fig. 4b) angeordnet sein. In beiden Fällen sind jeweils 16 Pixel dargestellt bzw. abgebildet. Andere Pixelzahlen und Pixelanordnungen sind im Lichte der Erfindung möglich.

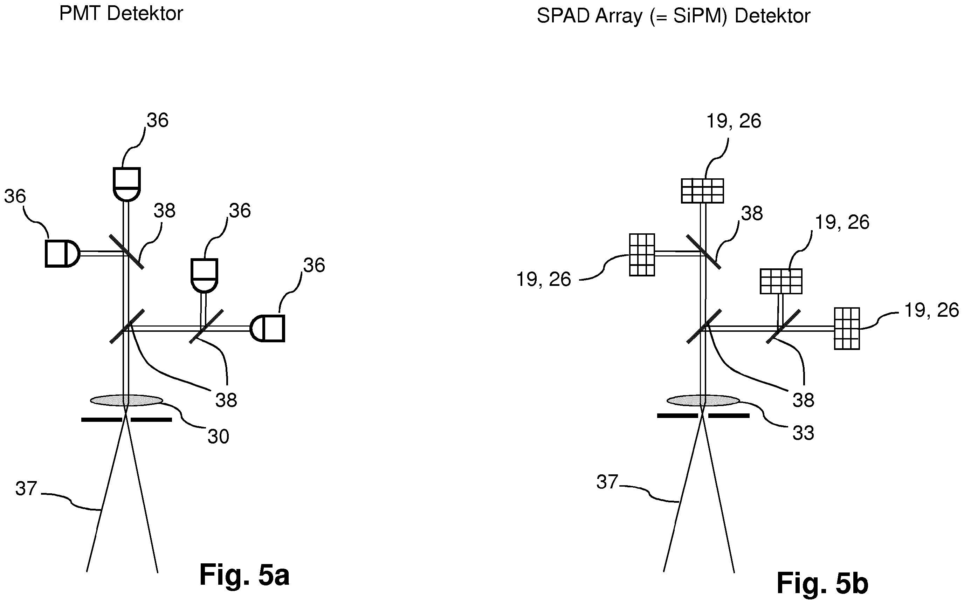

Fig. 5a zeigt den Einsatz herkömmlicher Photomultiplier 36, beispielsweise in der Konfokalmikroskopie, wobei dort das Detektionslicht 37 über verschiedene dichroitische Strahlteiler 38 zu den jeweiligen Photomultipliern 36 zur Detektion konkreter Spektralbereiche gelangt.

Fig. 5b zeigt den Ersatz der konventionellen Photomultiplier durch Anordnungen von SPADs 26, wobei den SPADs 26 Mikrolinsen zugeordnet sein können. Auch hier gelangt das Detektionslicht über dichroitische Strahlteiler 38 zu Detektoren, in diesem Fall zu den Anordnungen von SPADs 26, nämlich zu den verschiedenen SiPMs 19, die SPAD-Arrays umfassen.

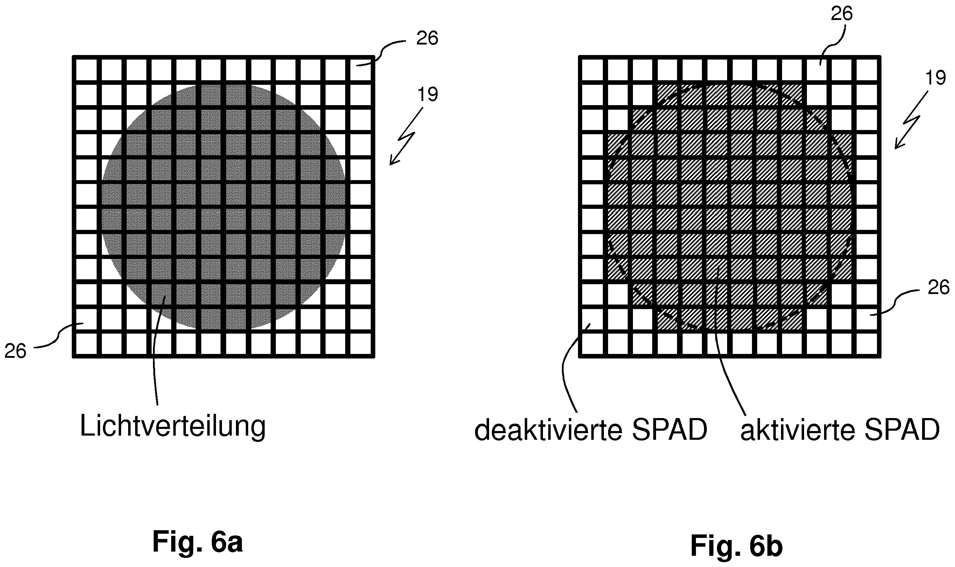

Fig. 6 zeigt in schematischer Ansicht die Anordnung von SPADs 26, die gemeinsam ein SiPM 19 bilden. Im Konkreten ist in Fig. 6a die Lichtverteilung angedeutet. Die SPADs 26 können einen Abstand (Subpixelabstand) von 50 µm × 50 µm aufweisen, wobei die Pixelgröße etwas kleiner ist, nämlich auf Grund des Zwischenabstands zwischen den Pixeln. Die photosensitive Fläche kann beispielsweise 40 × 40 Subpixel betragen, wobei dies der Größe einer photosensitiven Fläche im Bereich von 2 mm × 2 mm entspricht.

In Fig. 6b ist angedeutet, welche SPADs 26 aktiviert bzw. deaktiviert sind. Die innerhalb des angedeuteten Kreises befindlichen SPADs 26 und die von der Kreislinie geschnittenen SPADs 26 sind aktiviert. Die außerhalb bzw. nicht in Berührung zu dem im Kreis befindlichen SPADs 26 sind deaktiviert.

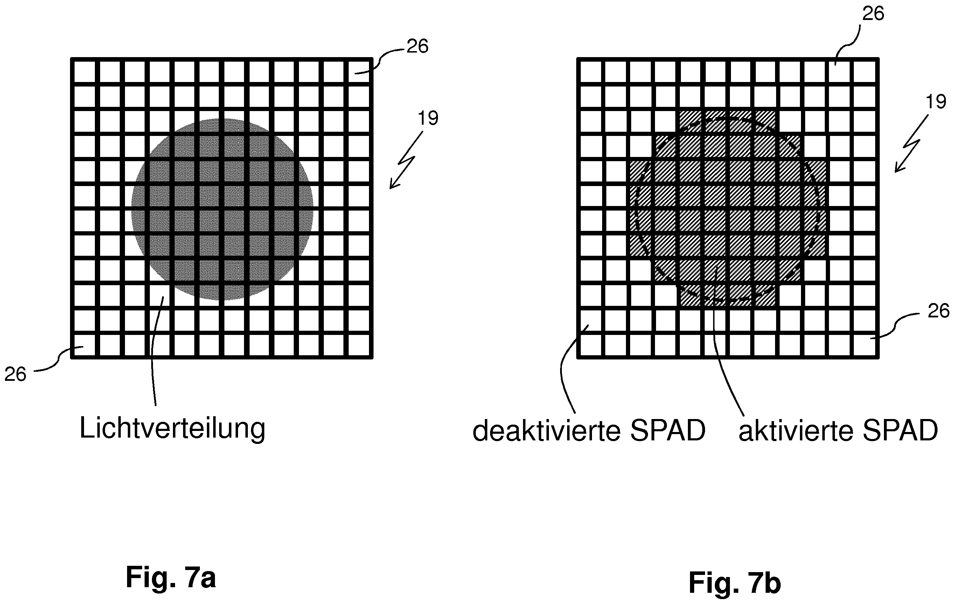

Fig. 7 zeigt die gleiche Anordnung wie in Fig. 6, jedoch mit einem kleineren Lichtspot, resultierend aus einer kleineren Pinhole-Größe. Fig. 7a zeigt die grundsätzliche Lichtverteilung und Fig. 7b das Verhältnis von aktivierten zu deaktivierten SPADs 26.

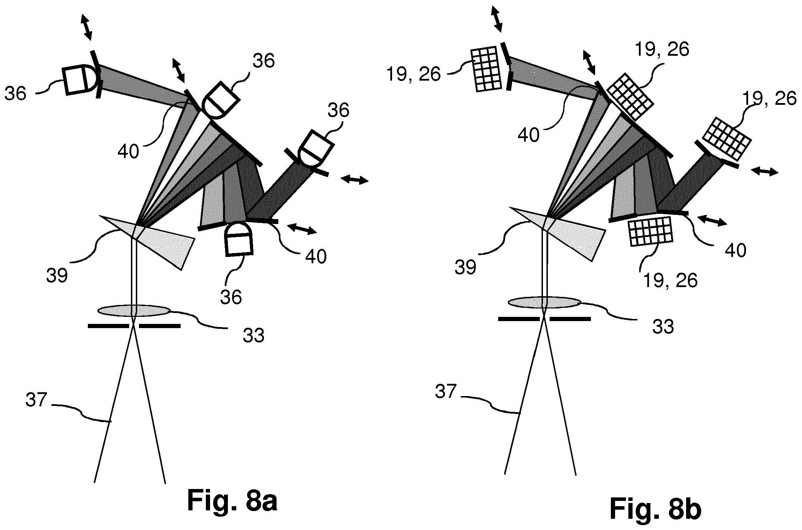

Fig. 8 zeigt entsprechend der Darstellung aus Fig. 5 zum einen die grundsätzliche Anordnung bei einem sogenannten SP-Detektor mit variabler Blende, wobei in Fig. 8a die herkömmliche Anwendung von Photomultipliern 36 angedeutet ist, während Fig. 8b den Einsatz von Anordnungen von SPADs 26, nämlich SiPMs 19, zeigt, wobei diese wiederum mit und ohne Mikrolinsen ausgestattet sein können.

Das Detektionslicht 37 gelangt über eine Optik 33 und ein Prisma 39, entsprechend aufgespalten ― über variable Spalt- oder Lochblenden 40 ― und Strahlteiler zu den Photomultipliern 36. Gemäß Fig. 8b sind die Photomultiplier ersetzt durch Arrays von SPADs 26, nämlich durch 1-Pixel-SiPMs 19.

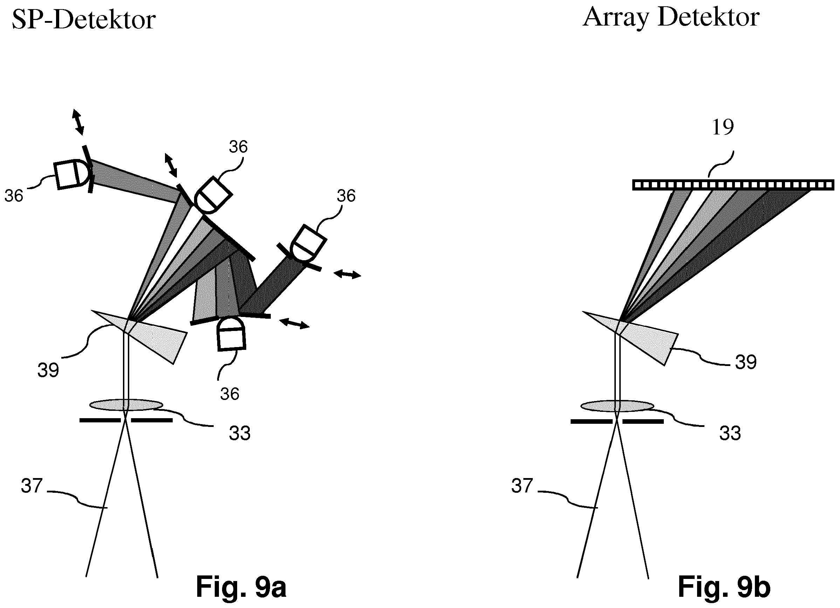

Fig. 9a zeigt den Stand der Technik insoweit, als dort Photomultiplier 36 bei variablen Spalt- oder Lochblenden 40 zum Einsatz kommen. Gemäß Fig. 9b sind diese durch ein Array 19 aus SPADs 26 ersetzt. Das Detektionslicht 37 gelangt entsprechend über eine Optik 33 und ein Prisma 39 zu dem Array (SiPM) bestehend aus einzelnen SPADs 26.

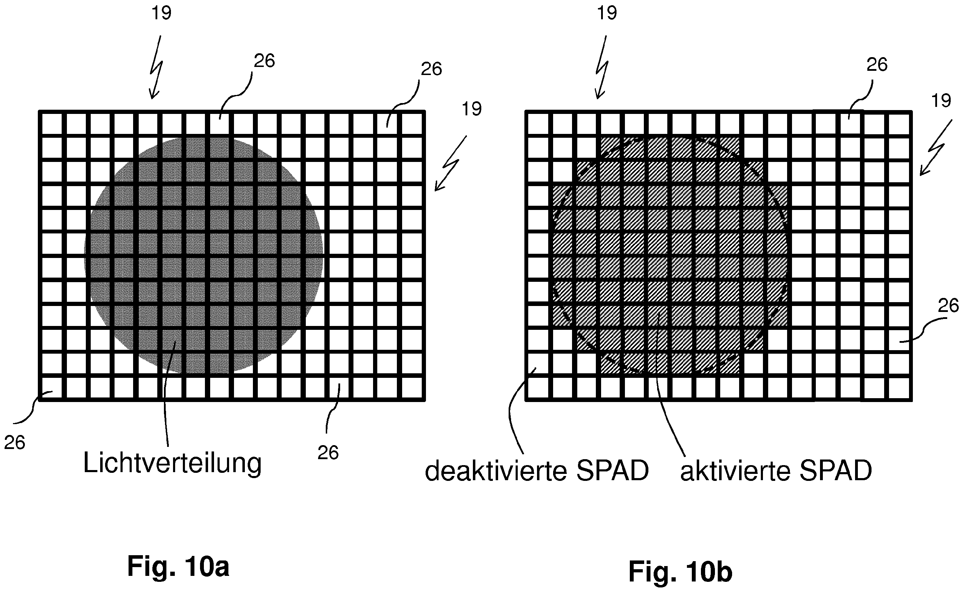

Die Anordnung aus SPADs entsprechend der Darstellung in Fig. 8b ist im Detail in Fig. 10 gezeigt, wobei dort die SPADs 26 ― in ihrer Gesamtheit ― ein 1-Pixel-SiPM 19 bilden.

Fig. 10a zeigt hier wiederum die Lichtverteilung. In Fig. 10b ist durch den angedeuteten Kreis die Aktivierung und Deaktivierung einzelner SPADs 26 angedeutet.

An dieser Stelle sei angemerkt, dass die in Fig. 10 dargestellte Anordnung von SPADs 26 zum Ersatz einzelner Photomultiplier 36 dient, nämlich im Rahmen eines sogenannten SP-Detektors mit variabler Bandbreit des zu detektierenden Lichts. Fig. 10 zeigt dabei ein Array aus SPADs zur Detektion einer ersten Detektionswellenlänge im Rahmen einer Anwendung nach Fig. 8.

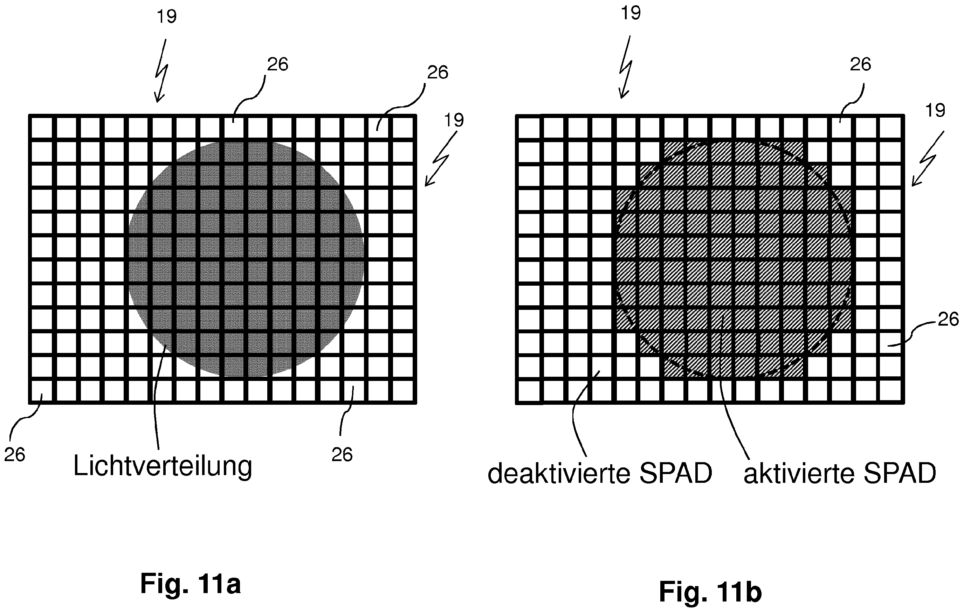

Fig. 11 zeigt eine entsprechende Anordnung von SPADs 26, nämlich einerseits wiederum die Lichtverteilung und andererseits die Aktivierung und Deaktivierung einzelner SPADs 26, jedoch in Bezug auf eine zweite Detektionswellenlänge im Rahmen des Einsatzes bei einem SP-Detektor entsprechend der Darstellung in Fig. 8.

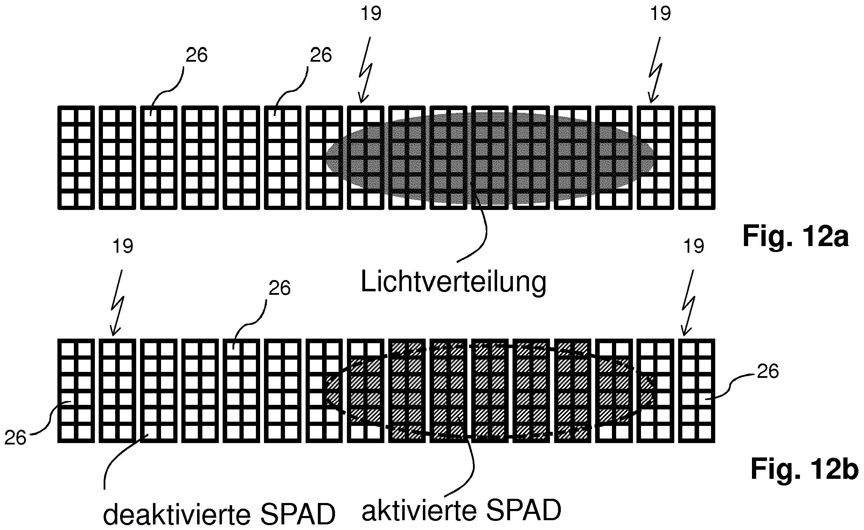

Fig. 12 zeigt den erfindungsgemäßen Aufbau einer Anordnung mehrerer SiPMs 19, wobei jedes SiPM 19 wiederum mehrere SPADs 26 umfasst. Fig. 12a zeigt im Konkreten die Lichtverteilung bei entsprechendem Spot im Rahmen eines Spektrometers wie in Fig. 9b gezeigt. Fig. 12b zeigt die Deaktivierung und Aktivierung eines SPADs entsprechend der Lichtverteilung.

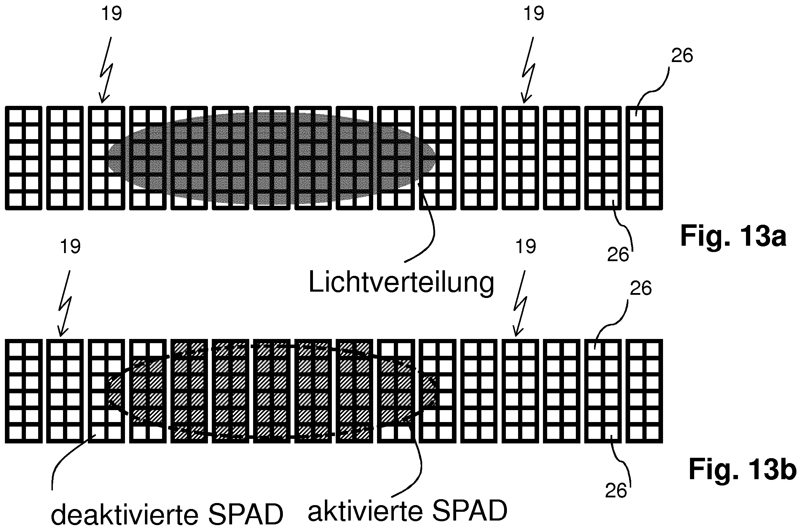

Fig. 13 zeigt einen Aufbau einer Anordnung mehrerer SiPMs 19 entsprechend Fig. 12, jedoch mit einer anderen Lichtverteilung, resultierend aus einer anderen Wellenlänge, beispielsweise des Fluoreszenzlichts.

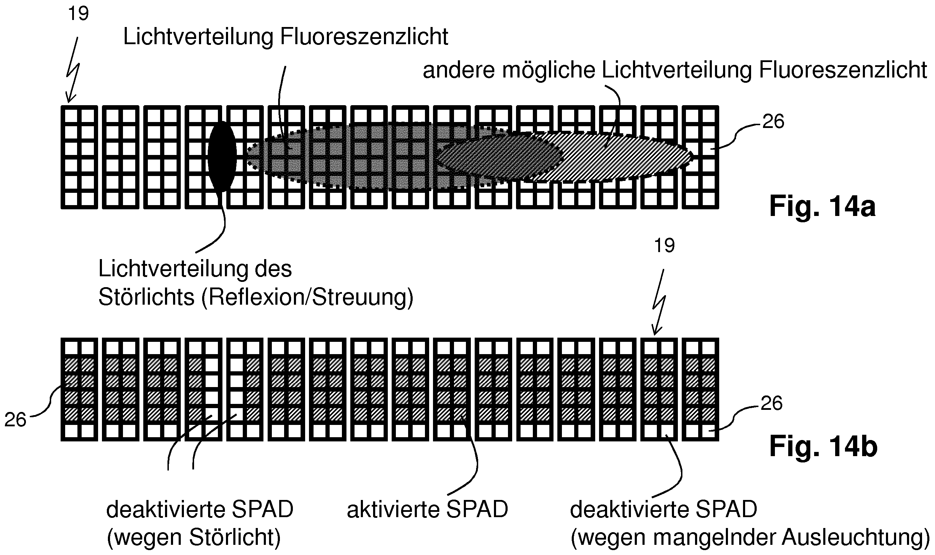

Fig. 14 ist vom grundsätzlichen Aufbau wie in den Fig. 12 und 13, wobei die Lichtverteilung des Fluoreszenzlichts wiederum anders ist. Entsprechend der Darstellung in Fig. 14a wird die Anordnung der SiPMs 19 mit dem zur Auswertung interessierenden Beleuchtungslicht 41 und mit Störlicht beaufschlagt. Es werden einzelne SPADs 26 zum einen wegen des Störlichts und zum anderen auf Grund mangelnder Ausleuchtung deaktiviert. Die aktivierten SPADs 26 dienen zur Auswertung.

Bei der Anwendung in einem Spektrometer wird speziell der Wellenlängenbereich im Spektrometer deaktiviert, an dem unerwünschtes Störlicht, beispielsweise Reflexions- oder Streulicht der Anregungs-Laserwellenlängen, auftrifft. Gegebenenfalls werden auch Nachbarbereiche deaktiviert, nämlich auf Grund von sogenanntem Übersprechen. Die Deaktivierung dieser Bereiche ist besonders wichtig, da das Störlicht in der Regel deutlich stärker als das Nutzlicht (Fluoreszenzlicht) ist. Da die Lichtverteilung des Nutzlichts von den vom Benutzer eingesetzten Fluorophoren abhängt, werden alle SPADs bzw. Pixel aktiviert, auf die kein Anregungslicht fällt (sofern es sich nicht um Defekt- bzw. Dunkelrauschpixel wie zuvor beschrieben handelt), so dass unabhängig von den eingesetzten Fluorophoren detektiert werden kann. Eine Störung von Anregungslicht ist ausgeschlossen. Ebenso kann mit mehreren Laserlinien gleichzeitig angeregt werden, wobei dann entsprechend mehrere Bereiche ausgeblendet werden.

Im Rahmen der Darstellung von Fig. 14 gibt es drei Gründe, einzelne SPADs bzw. Subpixel zu deaktivieren, nämlich nur dann, wenn zu wenig Beleuchtungslicht auf die SPADs bzw. Subpixel fällt, wenn einzelne SPADs bzw. Subpixel unzureichend bzw. schlecht arbeiten (Dunkelrauschen o.ä.) oder wenn auf die SPADs bzw. Subpixel Störlicht fällt.

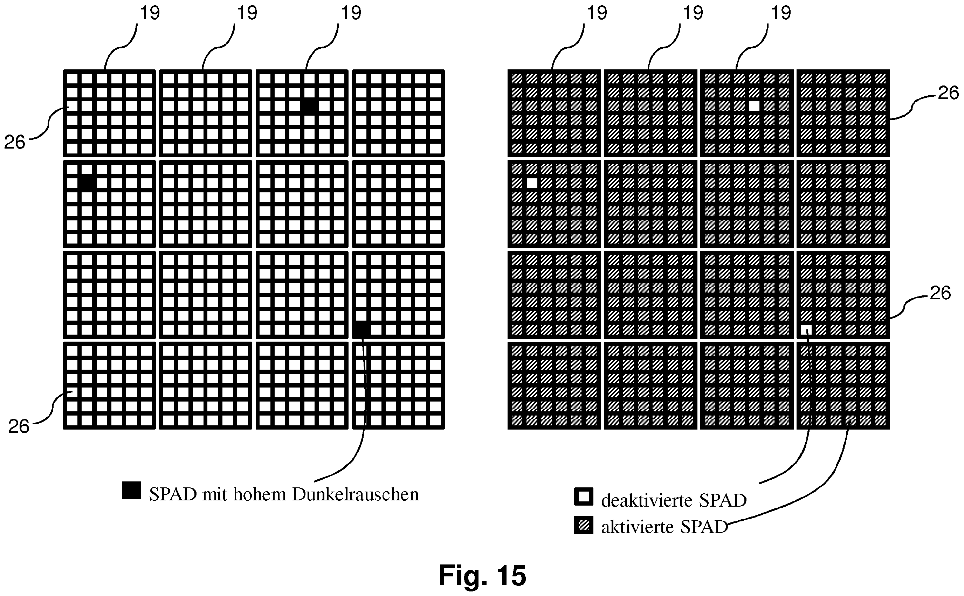

Fig. 15 zeigt die Anordnung mehrerer SiPMs 19 Sinne eines matrixartigen Arrays, wobei jedes SiPM 19 aus mehreren SPADs 26 besteht. Defekte bzw. nicht hinreichend gut arbeitende SPADs 26, die ein hohes Dunkelrauschen verursachen, sind deaktiviert.

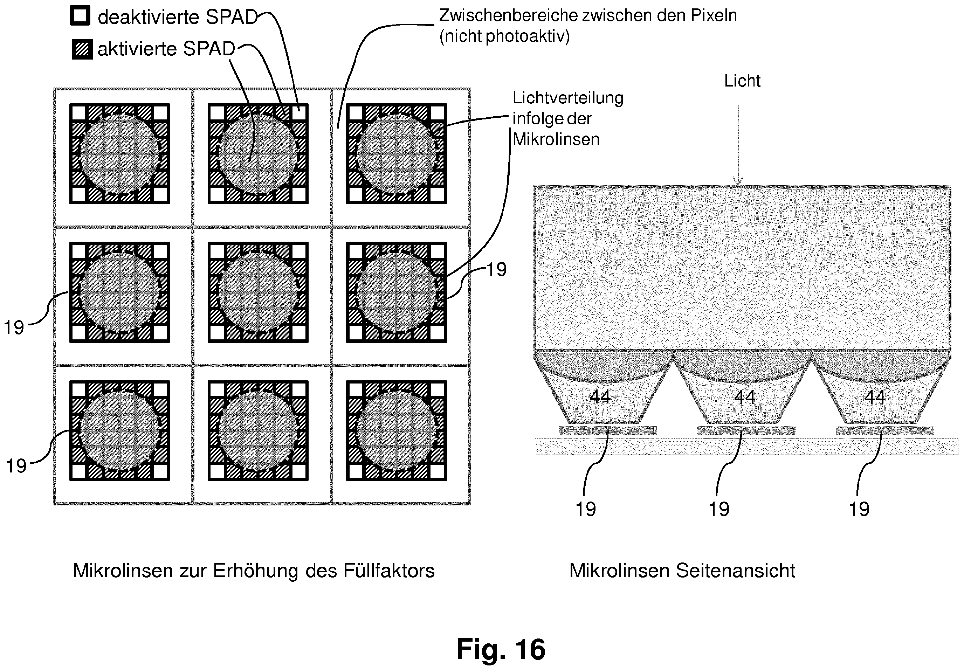

Fig. 16 zeigt schließlich die Anordnung mehrerer SiPMs 19, jeweils bestehend aus mehreren SPADs 26, auf einem Chip. Auf Grund der nicht nutzbaren Zwischenbereiche 43 sind den Arrays von SiPMs 19 Mikrolinsen 44 zugeordnet, die in Fig. 16 in Seitenansicht gezeigt sind. Unter Nutzung der Mikrolinsen 44 ergibt sich eine günstigere Lichtverteilung, jeweils fokussiert auf die nutzbaren Bereiche der SiPMs 19.

Außerdem zeigt Fig. 16 die deaktivierten SPADs, auf die kein Detektionslicht fällt.

Hinsichtlich weiterer Merkmale, die sich den Figuren nicht entnehmen lassen, sei zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele des erfindungsgemäßen Verfahrens lediglich zur Erörterung der beanspruchten Lehre dienen, diese jedoch nicht auf die Ausführungsbeispiele einschränken.

### Bezugszeichenliste

- 1: konfokales Scanmikroskop
- 2: Lichtquelle
- 3: Beleuchtungslichtstrahl
- 5: Umlenkmittel
- 6: Beleuchtungspinhole
- 7: Scaneinrichtung
- 9: Scanspielgel
- 12: Scanoptik
- 13: Mikroskopoptik
- 15: Objekt
- 17: Detektionslichtstrahl
- 18: Detektionslochblende
- 19: Array, SiPM
- 20: dispersives Element
- 21: Linse
- 22: Detektoroptik
- 23: Aufweitungsoptik
- 24: Stahlen
- 25: Strahlen
- 26: SPAD
- 27: analoge Auswertung
- 28: digitale Auswertung
- 29: AD-Wandler
- 30: digitale Auswertelogik
- 31: Detektor-Array
- 32: Blende/Pinhole
- 33: Optik
- 34: Prisma/Gitter
- 35: Optik
- 36: Photomultiplier
- 37: Detektionslicht
- 38: dichroitischer Strahlteiler
- 39: Prisma
- 40: variable Lochblende
- 41: Beleuchtungslicht
- 42: Streulicht
- 43: Zwischenbereich
- 44: Mikrolinse

## Patentansprüche

1. Verfahren zum Detektieren von Licht in einem Mikroskop (1), mit einer Anordnung mehrerer Silicon Photomultiplier (SiPM) (19), wobei jeder SiPM (19) aus einem Array von Single Photon Avalanche Dioden (SPAD) (26) besteht und ein Pixel bildet, wobei die Anordnung eine größere Fläche als das auftreffende Licht aufweist und wobei je SiPM (19) nur diejenigen SPADs (26) aktiviert und/oder ausgewertet werden, die mit einer bestimmten Mindestintensität von Licht beaufschlagt werden, so dass nur diejenigen SPADs (26) aktiviert werden, die zu einem hohen Signal-Rausch-Verhältnis beitragen und wobei je SiPM (19) diejenigen SPADs (26) deaktiviert oder nicht ausgewertet werden, deren Funktion unzureichend bzw. fehlerhaft ist.

2. Verfahren nach Anspruch 1, **dadurch gekennzeichnet, dass** die Mindestintensität der Beaufschlagung mit Licht aus einer oder mehreren Probemessungen bzw. einer Kalibrierung bei vorgegebener Systemeinstellung resultiert.

3. Verfahren nach Anspruch 1 oder 2, **dadurch gekennzeichnet, dass** durch Probe-/ Kalibriermessungen die unzureichend oder fehlerhaft arbeitenden SPADs (26) ermittelt werden und über die gesamte Betriebsdauer des SiPM (19) deaktiviert werden.

4. Verfahren nach einem der Ansprüche 1 bis 3, **dadurch gekennzeichnet, dass** zur Ermittlung unzureichender oder fehlerhafter SPADs (26) jedes einzelne SPAD (26) je SiPM (19) aktiviert wird und anhand der Pixelzählrate die Dunkelzählrate den einzelnen SPAD (26) zugeordnet wird.

5. Verfahren nach einem der Ansprüche 1 bis 4, **dadurch gekennzeichnet, dass** die unzureichende oder fehlerhafte Funktion einzelner SPADs (26) durch einen unteren Schwellwert des Verhältnisses von Nutzsignal zu Dunkelrauschen vorgegeben wird.

6. Verfahren nach einem der Ansprüche 1 bis 5, **dadurch gekennzeichnet, dass** die zu deaktivierenden SPADs (26) abgeklemmt werden oder über die Steuerung, vorzugsweise programmiertechnisch, deaktiviert werden.

7. Verfahren nach einem der Ansprüche 1 bis 6, **dadurch gekennzeichnet, dass** den einzelnen SPADs (26) eines SiPM (19) Mikrolinsen (44) bzw. ein auf die Anordnung der SPADs (26) abgestimmtes Mikrolinsenarray zugeordnet wird/werden, die das Licht auf die lichtempfindlichen Bereiche der SPADs (26) fokussieren.

8. Verfahren nach einem der Ansprüche 1 bis 7, **dadurch gekennzeichnet, dass** die SPADs (26) eines SiPM (19) auf einem Chip, vorzugsweise aus einem Siliziumsubstrat, angeordnet werden, wobei der Chip thermoelektrisch gekühlt wird.

## Claims

1. Method for detecting light in a microscope (1), having an arrangement of a plurality of Silicon Photomultipliers (SiPM) (19), wherein each SiPM (19) comprises an array of single-photon avalanche diodes (SPAD) (26) and forms a pixel,
wherein the arrangement has a greater surface-area than the incident light, and wherein for each SiPM (19) only the SPADs (26) which are acted on with a specific minimum intensity of light are activated and/or evaluated so that only the SPADs (26) which contribute to a high signal-to-noise ratio are activated, and wherein for each SiPM (19) the SPADs (26) whose function is inadequate or defective are deactivated or not evaluated.

2. Method according to claim 1, **characterised in that** the minimum intensity of the application of light results from one or more test measurements or a calibration with a predetermined system adjustment.

3. Method according to claim 1 or 2, **characterised in that**, as a result of test/calibration measurements, the SPADs (26) which are operating inadequately or in a defective manner are established and deactivated over the entire operating time of the SiPM (19).

4. Method according to any one of claims 1 to 3, **characterised in that** in order to establish inadequate or defective SPADs (26) each individual SPAD (26) is activated for each SiPM (19) and with reference to the pixel count rate the dark count rate is associated with the individual SPAD (26) .

5. Method according to any one of claims 1 to 4, **characterised in that** the inadequate or defective function of individual SPADs (26) is predetermined by a lower threshold value of the ratio of the useful signal to dark noise.

6. Method according to any one of claims 1 to 5, **characterised in that** the SPADs (26) which are intended to be deactivated are disconnected or deactivated via the control, preferably by means of programming technology.

7. Method according to any one of claims 1 to 6, **characterised in that** microlenses (44), which focus the light on the light-sensitive regions of the SPADs (26), or a microlens array, which is adapted to the arrangement of the SPADs (26), is/are associated with the individual SPADs (26) of an SiPM (19).

8. Method according to any one of claims 1 to 7, **characterised in that** the SPADs (26) of an SiPM (19) are arranged on a chip, preferably comprising a silicon substrate, wherein the chip is thermoelectrically cooled.

## Revendications

1. Procédé de détection de lumière dans un microscope (1), avec une disposition de plusieurs photomultiplicateurs au silicium (SiPM) (19), dans lequel chaque SiPM (19) est constitué d'une matrice de diodes à effet d'avalanche monophotonique (SPAD) (26) et forme un pixel, dans lequel la disposition présente une superficie plus grande que la lumière incidente et dans lequel, dans chaque SiPM (19), seules sont activées et/ou analysées les SPAD (26) qui sont sollicitées avec une intensité lumineuse minimale déterminée, de façon à ce que seules les SPAD (26) qui contribuent à un rapport signal-bruit élevé soient activées, et dans lequel, dans chaque SiPM (19), les SPAD (26) dont le fonctionnement est insuffisant respectivement défectueux sont désactivées ou non analysées.

2. Procédé selon la revendication 1, **caractérisé en ce que** l'intensité minimale de la sollicitation avec de la lumière résulte d'une ou plusieurs mesures d'échantillons respectivement d'un calibrage dans le cas d'un réglage de système prédéterminé.

3. Procédé selon la revendication 1 ou 2, **caractérisé en ce que**, grâce à des mesures d'échantillon / de calibrage, les SPAD (26) fonctionnant de manière insuffisante ou défectueuse sont déterminées et sont désactivées pendant toute la durée de fonctionnement du SiPM (19).

4. Procédé selon l'une des revendications 1 à 3, **caractérisé en ce que**, pour la détermination des SPAD (26) insuffisantes ou défectueuses, chaque SPAD (26) de chaque SiPM (19) est activée et, à l'aide du taux de comptage de pixels, le taux de comptage d'obscurité est attribué aux différentes SPAD (26).

5. Procédé selon l'une des revendications 1 à 4, **caractérisé en ce que** le fonctionnement insuffisant ou défectueux des différentes SPAD (26) est prédéterminée par une valeur seuil inférieure du rapport entre le signal utile et le bruit d'obscurité.

6. Procédé selon l'une des revendications 1 à 5, **caractérisé en ce que** les SPAD (26) à désactiver sont déconnectées ou déactivées par l'intermédiaire du dispositif de commande, de préférence par programmation.

7. Procédé selon l'une des revendications 1 à 6, **caractérisé en ce que**, aux différentes SPAD (26) d'un SiPM (19) sont attribuées des micro-lentilles (44) respectivement une matrice de micro-lentilles adaptée à la disposition des SPAD (26), qui focalisent la lumière sur les zones photosensibles des SPAD (26).

8. Procédé selon l'une des revendications 1 à 7, **caractérisé en ce que** les SPAD (26) d'un SiPM (19) sont disposées sur une puce, de préférence constituée d'un substrat de silicium, dans lequel la puce est refroidie de manière thermo-électrique.
